# EUROPEAN PATENT APPLICATION

(11) **EP 4 585 479 A1**
(43) Date of publication of application: **16.07.2025**
(21) Application number: 24151381.1
(22) Date of filing: 11.01.2024
(51) Int. Cl.: B60T 17/00, B01D 53/26, B60T 17/02, F15B 21/048

(54) **AIR DRYER SYSTEM AND METHOD OF CONTROLLING A PNEUMATIC VEHICLE SYSTEM**

(71) Applicant: ZF CV Systems Europe BV, 1170 Brüssel (BE)
(72) Inventor: SEMENIUK, Maciej, 58-506 Jelenia Gora (PL); PENDZICH, Kevin, 30161 Hannover (DE)
(74) Representative: Copi, Joachim

(57) **Abstract**

An air dryer system (10) comprises a dryer inlet (1), a dryer outlet (2), a desiccant cartridge (22), and a dryer exhaust (3). The air dryer system (10) comprises a purge valve (30) comprising a first purge valve port (31) connected to the dryer inlet (1) and a second purge valve port (32) connected to the dryer exhaust (3). The air dryer system (10) comprises a switching valve (40) comprises a first switching valve port (41) connected to the dryer inlet (1), a second switching valve port (42) connected to the desiccant cartridge (22), and a third switching valve port (43) connected to the dryer exhaust (3). The air dryer system (10) comprises a solenoid valve assembly (59) configured to provide pneumatic control signals (CP1, CP2, CP3, CPR).

## Description

The invention relates to an air dryer system and a method of controlling a pneumatic vehicle system. The invention relates in particular to an air dryer system comprising a pneumatically controllable valve assembly.

Many vehicles comprise one or several pneumatic consumers, such as brake cylinders, height adjustment cylinders, and/or a sensor cleaning system, without being limited thereto. To provide compressed air to a pneumatic consumer system, a compressor may be provided. For various types of pneumatic consumers, it is desirable that the humidity of compressed air is reduced prior to providing the compressed air to the pneumatic consumer(s). An air dryer comprising a desiccant cartridge may be installed downstream of the compressor. Air dryer systems may be configured to provide a desiccant regeneration.

US 2013/0195682 A1 and EP 4 112 399 A1 disclose a pneumatic vehicle system that comprises an air dryer system comprising at least one pneumatically controlled valve. EP 4 112 399 A1 discloses a twin chamber air dryer.

Air dryers may be configured to provide a control pressure signal that causes both fluid communication between an air dryer inlet and a desiccant cartridge to be interrupted and the compressor to enter an off-load state in which the compressor is idle or stopped. While such an air dryer may be suitable for many use cases, it may be beneficial that even more versatile air dryer operation is accommodated. For illustration, it would be desirable to provide an air dryer system that is operable such that a regeneration may be performed without having to set the compressor to idle mode. Alternatively or additionally, it would be desirable to provide an air dryer system that is operable to allow venting of a compressor discharge line connected to an inlet without affecting a pneumatic consumer system. It would in particular be desirable to provide such an air dryer system that can provide the desired additional functionality with a low number of additional solenoid valve(s) and/or that can be used in association with a twin chamber dryer configuration.

It is an object of the invention to provide an air dryer system that is operable in a more versatile manner and a control method for use with such an air dryer system. It is in an optional object to provide an air dryer system and a control method in which the air dryer system is operable such that a regeneration may be performed without having to set the compressor to an off-load state (e.g., idle or stopped) and/or which allows venting of a compressor discharge line without the venting affecting pressure in a pneumatic consumer system. It is a further optional object to provide such an air dryer system and control method operative to provide the desired additional functionality with a low number of additional solenoid valve(s) and/or that can be used in association with a twin chamber dryer configuration.

An air dryer system and a control method as recited in the independent claims are provided. The dependent claims define preferred and/or advantageous embodiments.

According to an aspect, there is provided an air dryer system. The air dryer system comprises a dryer inlet configured to receive air from a compressor discharge line, a dryer outlet configured to supply dried air, a desiccant cartridge configured to receive the air from the dryer inlet and to provide the dried air for outputting via the dryer outlet, a dryer exhaust, and a pneumatically controlled valve assembly. The pneumatically controlled valve assembly comprises a purge valve comprising a first purge valve port connected to the dryer inlet and a second purge valve port connected to the dryer exhaust. The purge valve is pneumatically controllable. The pneumatically controlled valve assembly comprises a switching valve comprising a first switching valve port connected to the dryer inlet, a second switching valve port connected to the desiccant cartridge, and a third switching valve port connected to the dryer exhaust. The switching valve is pneumatically controllable. The air dryer system further comprises a solenoid valve assembly. The solenoid valve assembly comprises a first solenoid valve configured to provide a first control pressure signal to control the purge valve. The solenoid valve assembly comprises a second solenoid valve configured to provide a second control pressure signal to control the compressor.

Various technical effects are attained by the air dryer system. The provision of the first solenoid valve configured to provide the first control pressure signal to control the purge valve and of the second solenoid valve, separate from the first solenoid valve and configured to provide the second control pressure signal to control the compressor allow the air dryer system to provide additional functions, such as enabling a regeneration of the desiccant cartridge without requiring the compressor to be set to an off-load state (such as idle or stopped). The provision of the pneumatically controllable valve assembly in association with the solenoid valve assembly also allows venting the compressor discharge line without affecting a pneumatic consumer system that may be directly or indirectly coupled to the dryer outlet.

The solenoid valve assembly may comprise a third solenoid valve configured to provide a regeneration control pressure signal to effect desiccant regeneration of the desiccant cartridge.

Thereby, versatility of the air valve system is further enhanced. The provision of a third solenoid valve, separate from the first solenoid valve operative to control the purge valve and separate from the second solenoid valve operative to control the compressor, enables the air valve system to provide functionalities such as enabling a decrease in pressure in the supply line even when the compressor is pumping, enabling a regeneration of the desiccant cartridge while reducing or eliminating an action on the compressor discharge line, and/or enabling venting of the compressor discharge line without affecting pneumatic consumer system pressure.

The third solenoid valve may be configured to provide both the regeneration control pressure signal and a third control pressure signal to control the switching valve.

Thereby, the functions of on-load operation (in which the compressor provides compressed air that is dried by the desiccant cartridge, with the dry air being provided to at least one pneumatic consumer), off-load operation (in which the compressor is set to an idle state or stopped), decreasing the pressure in the supply line via the air dryer system without requiring the compressor to be in an off-load state, regeneration of the desiccant cartridge (e.g., by an air flow from the dryer outlet to the dryer exhaust through the air dryer system) without affecting the compressor discharge line connected to the dryer inlet, and venting of the compressor discharge line (e.g., via the air dryer exhaust) without affecting pneumatic consumer system pressure can be implemented using an air dryer system having three solenoid valves (in particular for an air dryer system having a one-chamber configuration) or having four or five solenoid valves (for an air dryer system having a twin chamber configuration).

The solenoid valve assembly may be configured to provide the first control pressure signal, the second control pressure signal, and the regeneration control pressure signal independently of each other.

Thereby, the various states of the air dryer system are attainable using the solenoid valve assembly to provide the various control pressure signals.

The solenoid valve assembly may be configured such that the first solenoid valve, the second solenoid valve, and the third solenoid valve are independently controllable.

Thereby, the functions of on-load operation, off-load operation, decreasing the pressure in the supply line via the air dryer system without requiring the compressor to be in an off-load state, regeneration of the desiccant cartridge without affecting the compressor discharge line, and venting of the compressor discharge line without affecting the pneumatic consumer system pressure can be implemented by controlling the first solenoid valve, the second solenoid valve, and the third solenoid valve.

The air dryer system or an air dryer assembly that comprises the air dryer system may comprise an electronic control unit (ECU) configured to provide electric control signals to the solenoid valves of the solenoid valve assembly to control the solenoid valve assembly. The ECU may be configured to generate the electric control signals to control the solenoid valves of the solenoid valve assembly so as to implement functions that include, at least, a regeneration without requiring the compressor to be in off-load state and a discharge line venting which does not affect pressure in the supply line connected to the dryer outlet. The ECU may be configured to generate the electric control signals for different solenoid valves of the solenoid valve assembly independently of each other, but in a manner that is coordinated so as to implement the desired function.

Thereby, the ECU can control the functions of on-load operation, off-load operation, decreasing the pressure in the supply line via the air dryer system without requiring the compressor to be in an off-load state, regeneration of the desiccant cartridge without affecting the compressor discharge line, and venting of the compressor discharge line without affecting the pneumatic consumer system pressure.

The purge valve may have a first purge valve position and a second purge valve position. The purge valve may be configured such that it reduces or blocks air passage between the dryer inlet and the dryer exhaust when the purge valve is in the first purge valve position.

Thereby, the purge valve is operative to block fluid communication between the dryer inlet and the dryer exhaust via the purge valve, enabling functions such as supplying dried air via the dryer outlet (with fluid communication being established between the dryer inlet and the desiccant cartridge via the switching valve, while blocking fluid communication between the dryer inlet and the dryer exhaust via the purge valve) and regeneration (with fluid communication being established between the desiccant cartridge and the exhaust port via the switching valve) without affecting the compressor discharge line connected to the dryer inlet.

The purge valve may be configured to provide fluid communication between the dryer inlet and the dryer exhaust when the purge valve is in the second purge valve position.

Thereby, the purge valve can be operated to selectively enable communication between the dryer inlet and the dryer exhaust, for example for venting the compressor discharge line connected to the dryer inlet, with the venting being performed through the air dryer system. The provision of the second solenoid valve in addition to the first solenoid valve allows the purge valve and the compressor to be controlled in such a manner that the compressor is in a pumping state and the purge valve establishes fluid communication between the compressor discharge line and the dryer exhaust. Pressure in the pneumatic consumer system can be decreased even when the compressor is pumping.

The purge valve may be configured such that it is normally in the first purge valve state and that it selectively transitions into the second purge valve state responsive to the first control pressure signal (e.g., when the first control pressure signal is equal to a pressure at the dryer outlet).

Thereby, the purge valve can remain in its rest configuration for the on-load state, while being selectively activated for decreasing pressure in the pneumatic consumer system and/or for discharge line venting.

The purge valve may be or may comprise a 2/2-way valve.

Thereby, the mentioned operations are attainable in an efficient manner.

The switching valve may have a first switching valve position and a second switching valve position. The switching valve may be configured to provide fluid communication between the dryer inlet and the desiccant cartridge when the switching valve is in the first switching valve position. The switching valve may be configured to block fluid communication between the desiccant cartridge and the dryer exhaust when the switching valve is in the first switching valve position.

Thereby, the switching valve is operative to establish fluid communication between the dryer inlet and the desiccant cartridge via the switching valve, enabling functions such as supplying dried air via the dryer outlet (with fluid communication between the dryer inlet and the dryer exhaust being blocked via the purge valve).

The switching valve may be configured to provide fluid communication between the desiccant cartridge and the exhaust port when the switching valve is in the second switching valve position. The switching valve may be configured to block fluid communication between the dryer inlet and the desiccant cartridge when the switching valve is in the second switching valve position.

Thereby, the switching valve is operative to selectively establish fluid communication between the desiccant cartridge and the dryer exhaust via the switching valve while blocking fluid communication between the dryer inlet and the desiccant cartridge, enabling functions such as decreasing pressure in the pneumatic consumer system (e.g., by decreasing pressure in the supply line coupled to the dryer outlet, the decrease being performed via the air dryer system) or regeneration.

The switching valve may be configured such that it is normally in the first switching valve state and that it selectively transitions into the second switching valve state responsive to the third control pressure signal (e.g., when the third control pressure signal is equal to a pressure at the dryer outlet).

Thereby, the switching valve can remain in its rest configuration for the on-load state, while being selectively activated for decreasing pneumatic consumer system pressure without affecting the compressor discharge line and/or for regeneration.

The switching valve may be or may comprise a 3/2-way valve.

Thereby, the mentioned operations of the switching valve are attainable in an efficient manner.

The air dryer system may comprise an outlet line (which can also be referred to as supply port line), wherein the outlet line comprises an outlet check valve and is connected to the desiccant cartridge and the dryer outlet. The regeneration line may comprise a regeneration check valve and may be in fluid communication with the outlet line at a location between the desiccant cartridge and the outlet check valve. The air dryer system may be operative such that provision of the regeneration signal to the regeneration line enables air flow from the pneumatic consumer system to the desiccant cartridge for performing regeneration.

Thereby, regeneration can be implemented in an efficient manner.

The solenoid valve assembly may be configured such that each of the first, second, and third solenoid valves is operative to output a control pressure signal that can toggle between two different signal pressure values, which are also referred to as first and second pneumatic signal values herein. These two states can also be represented as a logical "0" (e.g., no positive pressure at solenoid valve output) and a logical "1" (solenoid valve outputting pressure equal to pressure at the dryer outlet).

Thereby, the solenoid valve assembly can be implemented in an efficient manner, with each of the solenoid valves having an input in fluid communication with the supply line or otherwise in fluid communication with the dryer outlet.

The solenoid valve assembly may be configured such that each of the first, second, and third solenoid valves outputs the first pneumatic signal value (e.g., no positive pressure at solenoid valve output) for an on-load state in which the compressor pumps and the air dryer provides dried air at the dryer outlet. Thereby, the solenoid valve assembly may be operative to provide the control pressure signals that set the air dryer assembly to the on-load state.

Alternatively or additionally, the solenoid valve assembly may be configured such that each of the first and third solenoid valves outputs the first pneumatic signal value (e.g., no positive pressure at solenoid valve output) and the second solenoid valve outputs the second pneumatic signal value (e.g., the pressure at the dryer outlet) for an off-load state in which the compressor is set to off-load operation (e.g., idle or stopped). Thereby, the solenoid valve assembly may be operative to provide the control pressure signals that set the air dryer assembly to the off-load state.

Alternatively or additionally, the solenoid valve assembly may be configured such that each of the first and third solenoid valves outputs the second pneumatic signal value (e.g., the pressure at the dryer outlet) and the second solenoid valve outputs the first pneumatic signal value (e.g., no positive pressure at solenoid valve output) for decreasing pressure in the pneumatic consumer system while the compressor continues to pump. Thereby, the solenoid valve assembly may be operative such that the purge valve is set to the second purge valve state (establishing fluid communication between the dryer inlet and the dryer exhaust), that the switching valve is set to the second switching valve state (which blocks fluid communication between the dryer inlet and the desiccant cartridge and establishes fluid communication between the desiccant cartridge and the exhaust port), and that air flow from the dryer outlet to the desiccant cartridge is enabled (by means of the regeneration control pressure signal).

Alternatively or additionally, the solenoid valve assembly may be configured such that each of the second and third solenoid valves outputs the second pneumatic signal value (e.g., the pressure at the dryer outlet) and the first solenoid valve outputs the first pneumatic signal value (e.g., no positive pressure at solenoid valve output) for regeneration. Thereby, the solenoid valve assembly may be operative such that the compressor is set to an off-load operation (e.g., idle or stopped), the purge valve is in the first purge valve state (blocking fluid communication between the dryer inlet and the dryer exhaust), the switching valve is set to the second switching valve state (which blocks fluid communication between the dryer inlet and the desiccant cartridge and establishes fluid communication between the desiccant cartridge and the exhaust port), and that air flow from the dryer outlet to the desiccant cartridge is enabled (by means of the regeneration control pressure signal). Thereby, regeneration is implemented in a manner which does not have an effect on the compressor discharge line connected to the dryer inlet.

Alternatively or additionally, the solenoid valve assembly may be configured such that each of the first and second solenoid valves outputs the second pneumatic signal value (e.g., the pressure at the dryer outlet) and the third solenoid valve outputs the first pneumatic signal value (e.g., no positive pressure at solenoid valve output) for performing venting of the compressor discharge line. Thereby, the solenoid valve assembly may be operative such that the compressor is set to an off-load operation (e.g., idle or stopped), the purge valve is set to the second purge valve state (establishing fluid communication between the dryer inlet and the dryer exhaust), and that the switching valve is in the first switching valve state (which blocks fluid communication between the desiccant cartridge and the exhaust port through the switching valve). Thereby, the compressor discharge line is vented without affecting pneumatic consumer system pressure.

The ECU may be configured to generate a first electric control signal to control the first solenoid valve, a second electric control signal to control the second solenoid valve, and a third electric control signal to control the third solenoid valve so as to provide the various functions herein.

The air dryer system may comprise a further desiccant cartridge.

Thereby, the air dryer system may have a twin chamber configuration. This provides the effect of further enhancing lifetime before cartridge replacement is required.

The air dryer system may comprise a further pneumatically controlled valve assembly comprising a further purge valve and a further switching valve. The further purge valve may be pneumatically controllable. The further switching valve may be pneumatically controllable.

Thereby, pneumatic control is implemented for both chambers of the twin chamber air dryer system. This allows the various functions to be implemented using, e.g., four or five solenoid valves.

The first solenoid valve may be configured to provide the first control pressure signal to control both the purge valve and the further purge valve.

Thereby, the first solenoid valve can be used to pneumatically control both the purge valve and the further purge valve.

The air dryer system may comprise a further inlet port configured to be coupled to the compressor discharge line and a further exhaust port. The further purge valve may be configured to selectively establish fluid communication between the further inlet port and the further exhaust port. The further switching valve may be configured to establish fluid communication between the further desiccant cartridge and one of the further inlet port and the further exhaust port.

Thereby, the further purge valve and the further switching valve are configured to operate as explained in association with the purge valve and the switching valve.

The solenoid valve assembly may comprise at least one fourth solenoid valve configured to generate at least one fourth control pressure signal to control at least one of the switching valve and the further switching valve.

Thereby, a selection can be made as to which of the desiccant cartridge and the further desiccant cartridge is to dry the air received from the compressor discharge line and which of the desiccant cartridge and the further desiccant cartridge is to be regenerated.

The solenoid valve assembly may be configured such that the at least one fourth control pressure signal selects one of the desiccant cartridge and the further desiccant cartridge to perform desiccant regeneration or air drying.

Thereby, a selection can be made as to which of the desiccant cartridge and the further desiccant cartridge is to dry the air received from the compressor discharge line and which of the desiccant cartridge and the further desiccant cartridge is to be regenerated.

There is also disclosed an air dryer. The air dryer may comprise an air dryer housing and the air dryer system of any aspect or embodiment disclosed herein. The pneumatically controlled valve assembly may be arranged in the air dryer housing. The solenoid valve assembly may be arranged in the air dryer housing.

Thereby, ease of installation is attained, as both he solenoid valve assembly and the pneumatically controlled valve assembly are arranged in the air dryer housing.

In a further aspect, the solenoid valve assembly may be provided external to and separately from the air dryer. The combination of air dryer and solenoid valve assembly is also referred to as an air dryer assembly herein.

Accordingly, there is also disclosed an air dryer assembly. The air dryer assembly may comprise an air dryer housing and the air dryer system of any aspect or embodiment disclosed herein. The pneumatically controlled valve assembly is arranged in the air dryer housing. The solenoid valve assembly is arranged outside the air dryer housing and is connected to the pneumatically controlled valve assembly by pneumatic connections.

Thereby, greater flexibility in positioning the solenoid valve assembly is attained. Providing the solenoid valve assembly separately from the air dryer may also be beneficial for use with a twin chamber air dryer.

The air dryer housing may have a first control pressure port configured to receive the first control pressure signal, a second control pressure port configured to receive the second control pressure signal, a third control pressure port configured to receive the third control pressure signal, and a regeneration control signal port configured to receive the regeneration control pressure signal.

Thereby, the ports configured to receive the various pressure control signals are provided on the air dryer housing.

There is also disclosed a pneumatic vehicle system. The pneumatic vehicle system may comprise a compressor, the air dryer or the air dryer assembly, a pneumatic consumer system, a compressor discharge line connected to a discharge port of the compressor and to the dryer inlet, a supply line connected to the dryer outlet and to the pneumatic consumer system, and an electronic control unit configured to control the solenoid valve assembly.

Thereby, a pneumatic vehicle system is provided in which the air dryer or air dryer assembly provides enhanced functionality.

The pneumatic vehicle system may comprise a pneumatic braking system (such as an electropneumatic braking system) and/or a pneumatic levelling system (such as an electropneumatic levelling system).

There is also disclosed a commercial vehicle, comprising the pneumatic vehicle system.

Thereby, a commercial vehicle is provided in which the air dryer or air dryer assembly provides enhanced functionality.

According to another aspect, there is provided a method of controlling a pneumatic vehicle system. The pneumatic vehicle system comprises a compressor and an air dryer, the compressor comprising a compressor discharge port, the air dryer being connected to the compressor discharge port by a compressor discharge line. The air dryer comprises a dryer inlet configured to receive air from the compressor discharge line, a dryer outlet configured to supply dried air, a desiccant cartridge configured to receive the air from the dryer inlet and to provide the dried air for outputting via the dryer outlet, and a dryer exhaust. The air dryer further comprises a pneumatically controlled valve assembly. The pneumatically controlled valve assembly comprises a purge valve comprising a first purge valve port connected to the dryer inlet and a second purge valve port connected to the dryer exhaust, the purge valve being pneumatically controllable, and a switching valve comprising a first switching valve port connected to the dryer inlet, a second switching valve port connected to the desiccant cartridge, and a third switching valve port connected to the dryer exhaust, the switching valve being pneumatically controllable. The method comprises providing, by a first solenoid valve, a first control pressure signal to control the purge valve, and providing, by a second solenoid valve, a second control pressure signal to control the compressor.

Various technical effects are attained by the control method. By using the first solenoid valve to provide the first control pressure signal to control the purge valve and using the second solenoid valve to provide the second control pressure signal to control the compressor, the air dryer system can provide additional functions. Examples for such functions include enabling a regeneration of the desiccant cartridge without requiring the compressor to be set to an off-load state (such as idle or stopped). By using the solenoid valve assembly in association with the solenoid valve assembly, the control method also enables venting the compressor discharge line without affecting a pressure in a supply line connected to the dryer outlet.

The method may comprise providing, by a third solenoid valve, a regeneration control pressure signal to effect desiccant regeneration of the desiccant cartridge.

Thereby, versatility of the air valve system is further enhanced. The provision of a third solenoid valve, separate from the first solenoid valve operative to control the purge valve and separate from the second solenoid valve operative to control the compressor, enables the air valve system to provide functionalities such as enabling a decrease in pressure in the supply line even when the compressor is pumping, enabling a regeneration of the desiccant cartridge while reducing or eliminating an action on the compressor discharge line, and/or enabling venting of the compressor discharge line without affecting pneumatic consumer system pressure.

The method may comprise providing, by the third solenoid valve, both the regeneration control pressure signal and a third control pressure signal to control the switching valve.

Thereby, the various functions can be implemented without significantly adding to the complexity of the solenoid valve assembly.

The method may further comprise providing, by an electronic control unit (ECU), electric control signals to the solenoid valves of the solenoid valve assembly to control the solenoid valve assembly. The method may comprise generating, by the ECU, the electric control signals to control the solenoid valves of the solenoid valve assembly so as to implement functions that include, at least, a regeneration without requiring the compressor to be in off-load state and a discharge line venting which does not affect pressure in the supply line connected to the dryer outlet.

Thereby, the ECU can control the various functions of the air dryer assembly.

Additional features of the control method and the effects attained thereby correspond to features disclosed in association with the air dryer system, the air dryer or air dryer assembly, the pneumatic vehicle system, or the commercial vehicle.

The method may be performed by or using the air dryer system, the air dryer or air dryer assembly, the pneumatic vehicle system, or the commercial vehicle disclosed herein.

Various effects and advantages are attained by the air dryer system, the air dryer, the air dryer assembly, the pneumatic vehicle system, the commercial vehicle, and the control method disclosed herein. The air dryer system is more versatile and provides additional functions.

Further embodiments are defined in the claims. These and other aspects of the invention will be apparent from and explained in more detail with reference to the embodiments described hereinafter with reference to the accompanying drawings, in which:
Fig. 1 is a pneumatic circuit representation of an air dryer system according to an embodiment;
Fig. 2 is a pneumatic circuit representation of an air dryer system according to another embodiment;
Fig. 3 is a schematic representation of a pneumatic system comprising the air dryer system of Fig. 2;
Fig. 4 is a schematic representation of a pneumatic system comprising the air dryer system of Fig. 1;
Fig. 5 is a pneumatic circuit representation of an air dryer system having a twin chamber configuration according to an embodiment;
Fig. 6 is a pneumatic circuit representation of an air dryer system having a twin chamber configuration according to another embodiment;
Fig. 7 is a schematic representation of a vehicle comprising a pneumatic vehicle system according to an embodiment;
Fig. 8 is a schematic representation of a vehicle comprising a pneumatic braking system according to an embodiment;
Fig. 9 is a schematic representation of a vehicle comprising a pneumatic braking system according to an embodiment;
Fig. 10 is a flow chart of a method according to an embodiment;
Fig. 11 is a flow chart of a method according to an embodiment;
Fig. 12 is a schematic representation of a commercial vehicle comprising an air dryer system according to an embodiment.

Embodiments of the invention will be described with reference to the drawings. In the drawings, similar or identical reference signs designate elements with similar or identical configuration and/or function.

To avoid repetition in the Figs. and the description of the various aspects and illustrative embodiments, it is be understood that many features are common to several aspects and embodiments. Omission of an aspect from a description or Fig. does not imply that the aspect is missing from embodiments that incorporate that aspect. Instead, the aspect may have been omitted for clarity. Like numbers in two or more figures represent the same or similar elements.

Air dryer systems, air dryers, air dryer assemblies, and pneumatic vehicle systems will be described. As used herein, the term "air dryer system" refers to a system comprising components integrated into an air dryer, it not being required that all components of the air dryer system be structural elements of the air dryer. For illustration, an air dryer system according to some embodiments may comprise a solenoid valve assembly that is separate from and fluidically connected to an air dryer. The term "air dryer assembly" refers to an assembly that comprises an air dryer comprising the air dryer system according to an embodiment, or to an assembly that comprises a solenoid valve assembly and an air dryer comprising at least a pneumatically controlled valve assembly controllable by the solenoid valve assembly. The air dryer assembly may include additional components, such as one or several of a compressor, a compressor discharge line, and/or a supply line. A pneumatic vehicle system comprises the air dryer system, a compressor, and at least one pneumatic consumer system. The at least one pneumatic consumer system may comprise a pneumatic brake system and/or a pneumatic levelling system, without being limited thereto. As used herein, the term "pneumatic vehicle system" encompasses an electropneumatic vehicle system (such as an electropneumatic brake and/or levelling system).

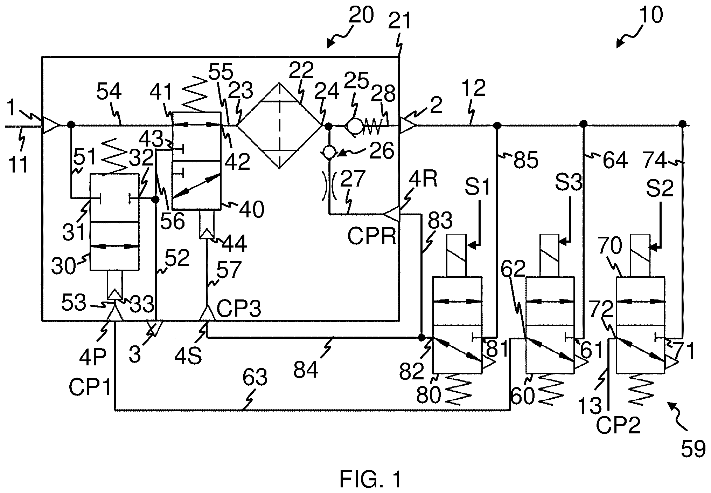

Fig. 1 shows a pneumatic circuit representation of an air dryer system 10. The air dryer system 10 comprises a desiccant cartridge 22, a pneumatically controllable valve assembly comprising a purge valve 30 and a switching valve 40, and a solenoid valve assembly 59. The air dryer system 10 may comprise an air dryer 20 having a housing 21. At least the purge valve 30 and the switching valve 40 may be provided in the housing 21. The desiccant cartridge 22 may be configured for being reversibly engageable with and disengageable from the housing 21 in a destruction-free manner.

The air dryer system 10 has a dryer inlet 1, a dryer outlet 2, and a dryer exhaust 3. The air dryer system 10 is configured to receive air from a compressor discharge line 11 at the dryer inlet 1. The air may be pressurized air, having a pressure that exceeds ambient pressure. The air dryer system 10 is configured to provide dried air to a supply line 12, to thereby provide the dried air to a pneumatic consumer system. The air dryer system 10 is configured to exhaust air through the dryer exhaust 3, for example during one, several, or all of regeneration of the desiccant cartridge 22, venting of the compressor discharge line 11, and decreasing pressure in the pneumatic consumer system.

The desiccant cartridge 22 has a desiccant cartridge port 23 and a further desiccant cartridge port 24. The further desiccant cartridge port 24 is connected to an outlet line 28. The outlet line 28 is also connected to the dryer outlet 2. The outlet line 28 has an outlet check valve 25.

The air dryer 20 comprises a regeneration line 27. The regeneration line 27 is connected to the outlet line 28 at a position between the further desiccant cartridge port 24 and the outlet check valve 25. The regeneration line 27 comprises a regeneration check valve 26. This configuration allows regeneration of the desiccant cartridge 22 to be performed responsive to providing a regeneration control pressure signal CPR to the regeneration line 27.

The air dryer 20 comprises several control input ports, including a first control input port 4P, a second control input port 4R, and third control input port 4S. The second control input port 4R is configured to receive the regeneration control pressure signal CPR.

The purge valve 30 has a first purge valve port 31 and a second purge valve port 32. The first purge valve port 31 is in fluid communication with the dryer inlet 1 via a first purge valve connection line 51. The second purge valve port 32 is in fluid communication with the dryer exhaust 3 via a second purge valve connection line 52. The purge valve 30 is pneumatically controllable. The air dryer system 20 is configured such that a purge valve control input 33 is in fluid communication, via a purge valve control signal line 53, with the first control input port 4P. By means of a first control pressure signal CP1, the purge valve 30 can be selectively set to a second purge valve state in which the purge valve 30 provides an air flow path from the first purge valve port 31 to the second purge valve port 32 and, thus, to the dryer exhaust 3. The purge valve 30 has a first purge valve state (which may be the rest state of the purge valve 30) in which the purge valve 30 blocks or significantly reduces air flow from the first purge valve port 31 to the dryer exhaust 3 through the purge valve 30. The purge valve 30 may be implemented as a 2/2-way valve.

The switching valve 40 has a first switching valve port 41, a second switching valve port 42, and a third switching valve port 43. The first switching valve port 41 is in fluid communication with the dryer inlet 1 via a first switching valve connection line 54. The second switching valve port 42 is in fluid communication with the desiccant cartridge port 23 via a second switching valve connection line 55. The third switching valve port 43 is in fluid communication with the dryer exhaust 3 via a third switching valve communication line 56. The switching valve 40 is pneumatically controllable. The air dryer system 20 is configured such that a switching valve control input 44 is in fluid communication, via a switching valve control signal line 57, with a third control input port 4P. The switching valve 40 has a first switching valve state in which the switching valve 40 provides fluid communication between the first switching valve port 41 and the second switching valve port 42 while concurrently blocking fluid communication between the second switching valve port 42 and the third switching valve port 43. The switching valve 40 has a second switching valve state in which the switching valve 40 blocks fluid communication between the first switching valve port 41 and the second switching valve port 42 while concurrently providing fluid communication between the second switching valve port 42 and the third switching valve port 43. By means of a third control pressure signal CP3, the switching valve 40 can be selectively set to a second switching valve state in which the switching valve 40 provides an air flow path from the second switching valve port 44 to the third switching valve port 43 and, thus, to the dryer exhaust 3. The switching valve 40 may be implemented as a 3/2-way valve.

The air dryer system 10 comprises the solenoid valve assembly 59. The solenoid valve assembly 30 is configured to provide the first control pressure signal CP1, a second control pressure signal CP2 for off-loading the compressor (e.g., by causing the compressor to enter idle mode or stop), the third control pressure signal CP3, and the regeneration control pressure signal CPR. The solenoid valve assembly 59 comprises a first solenoid valve 60 configured to provide the first control pressure signal CP1. The solenoid valve assembly 59 comprises a second solenoid valve 70 configured to provide the second control pressure signal CP2. The solenoid valve assembly 59 comprises a third solenoid valve 80 configured to provide the regeneration control pressure signal CPR and the third control pressure signal CP3. The first solenoid valve 60, the second solenoid valve 70, and the third solenoid valve 80 may be independently controllable. The first solenoid valve 60, the second solenoid valve 70, and the third solenoid valve 80 may be configured to output, in their normal solenoid valve states (i.e., in the solenoid valve rest states in which the solenoid is not energized), a first control pressure value (such as ambient pressure). The first solenoid valve 60, the second solenoid valve 70, and the third solenoid valve 80 may be configured to output, in their energized states, a second control pressure value, which may be equal to the pressure in the supply line 12. In other words, the first solenoid valve 60, the second solenoid valve 70, and the third solenoid valve 80 may be configured to selectively provide the supply line pressure as control pressure signal.

The first solenoid valve 60 may comprise a first solenoid valve input port 61 and a first solenoid valve output port 62. The first solenoid valve input port 61 is in fluid communication with the supply line 12 via a first solenoid valve input line 64. The first solenoid valve output port 62 is in fluid communication with the first control input port 4P via a first control signal line 63. The first solenoid valve 60 is configured to establish fluid communication between the first solenoid valve input port 61 and the first solenoid valve output port 62 responsive to a first electric control signal S1.

The second solenoid valve 70 may comprise a second solenoid valve input port 71 and a second solenoid valve output port 72. The second solenoid valve input port 71 is in fluid communication with the supply line 12 via a second solenoid valve input line 74. The second solenoid valve output port 72 is configured to provide the second control pressure signal CP2 to the compressor via a compressor off-loading control line 13. The second solenoid valve 70 is configured to establish fluid communication between the second solenoid valve input port 71 and the second solenoid valve output port 72 responsive to a second electric control signal S2.

The third solenoid valve 80 may comprise a third solenoid valve input port 81 and a third solenoid valve output port 82. The third solenoid valve input port 81 is in fluid communication with the supply line 12 via a third solenoid valve input line 84. The third solenoid valve output port 82 is in fluid communication with the second control input port 4R via a regeneration control signal line 83. The third solenoid valve output port 82 is in fluid communication with the third control input port 4S via a third control signal line 83. The third solenoid valve 80 is configured to establish fluid communication between the third solenoid valve input port 81 and the third solenoid valve output port 82 responsive to a third electric control signal S3.

The first solenoid valve 60, the second solenoid valve 70, and the third solenoid valve 80 may respectively be implemented as 3/2-way valves (with the third solenoid valve port being respectively in communication with ambient atmosphere) or as 2/2-way valves.

The solenoid valve assembly 59 may be configured such that each of the first, second, and third solenoid valves 60, 70, 80 outputs a first pneumatic signal value (e.g., no positive pressure at the solenoid valve output ports 62, 72, 82) for an on-load state in which the compressor pumps and the air dryer 20 provides dried air at the dryer outlet 2. Thereby, the solenoid valve assembly 59 is operative to provide the control pressure signals that set the air dryer assembly 10 to the on-load state.

The solenoid valve assembly 59 may be configured such that both the first solenoid valve 60 and the third solenoid valve 80 outputs the first pneumatic signal value (e.g., no positive pressure at the solenoid valve output ports 62, 82) and the second solenoid valve 70 outputs the second pneumatic signal value (e.g., the pressure at the dryer outlet 2) to off-load the compressor (e.g., for setting the compressor to idle mode or stopping the compressor). Thereby, the solenoid valve assembly 59 may be operative to provide the control pressure signals that set the air dryer assembly 10 to the off-load state.

The solenoid valve assembly 59 may be configured such that both the first solenoid valve 60 and the third solenoid valve 80 outputs the second pneumatic signal value (e.g., the pressure at the dryer outlet 2) and the second solenoid valve 70 outputs the first pneumatic signal value (e.g., no positive pressure at solenoid valve output port 72) for decreasing pressure in the pneumatic consumer system while the compressor continues to pump. Thereby, the solenoid valve assembly 59 may be operative such that the purge valve 30 is set to the second purge valve state (establishing fluid communication between the dryer inlet 1 and the dryer exhaust 3), that the switching valve 40 is set to the second switching valve state (which blocks fluid communication between the dryer inlet 1 and the desiccant cartridge 22 and establishes fluid communication between the desiccant cartridge 22 and the exhaust port 3), and that air flow from the dryer outlet 2 to the desiccant cartridge 22 is enabled (by means of the regeneration control pressure signal CPR).

The solenoid valve assembly 59 may be configured such that both the second solenoid valve 70 and the third solenoid valve 80 outputs the second pneumatic signal value (e.g., the pressure at the dryer outlet 2) and the first solenoid valve 60 outputs the first pneumatic signal value (e.g., no positive pressure at solenoid valve output port 72) for regeneration. Thereby, the solenoid valve assembly 59 is operative such that the compressor is set to an off-load operation (e.g., idle or stopped), the purge valve 30 is in the first purge valve state (blocking fluid communication between the dryer inlet 1 and the dryer exhaust 3), that the switching valve 40 is set to the second switching valve state (which blocks fluid communication between the dryer inlet 1 and the desiccant cartridge 22 and establishes fluid communication between the desiccant cartridge 22 and the exhaust port 3), and that air flow from the dryer outlet 2 to the desiccant cartridge 22 is enabled (by means of the regeneration control pressure signal CPR). Thereby, regeneration is implemented in a manner which does not have an effect on the compressor discharge line 11 connected to the dryer inlet 1.

The solenoid valve assembly 59 may be configured such that both the first solenoid valve 60 and the second solenoid valve 70 output the second pneumatic signal value (e.g., the pressure at the dryer outlet 2) and the third solenoid valve outputs 80 the first pneumatic signal value (e.g., no positive pressure at the third solenoid valve output port 82) for performing venting of the compressor discharge line 11. Thereby, the solenoid valve assembly 59 may be operative such that the compressor is set to an off-load operation (e.g., idle or stopped), the purge valve 30 is set to the second purge valve state (establishing fluid communication between the dryer inlet 1 and the dryer exhaust 3), and that the switching valve 40 is in the first switching valve state (which blocks fluid communication between the desiccant cartridge 22 and the exhaust port 1 through the switching valve 40). Thereby, the compressor discharge line is vented without affecting pneumatic consumer system pressure (e.g., without affecting the pressure in the supply line 12).

Thus, the solenoid valve assembly 59 in association with the pneumatically controllable valve assembly comprising the purge valve 30 and the switching valve 40 is configured to provide more versatile air dryer system functions. In particular, the air dryer system 10 is configured to allow a regeneration to be performed without affecting the compressor discharge line 11 and/or to perform venting of the compressor discharge line 11 without affecting the pressure in the pneumatic consumer system (e.g., without affecting the pressure in the supply line 12). The air dryer system 10 also allows pressure of the pneumatic consumer system to be decreased while the compressor is pumping.

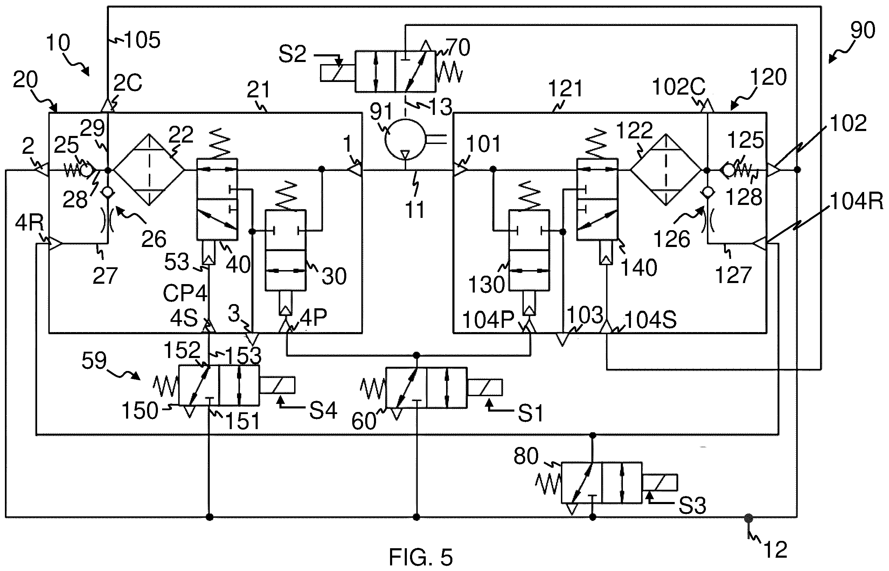

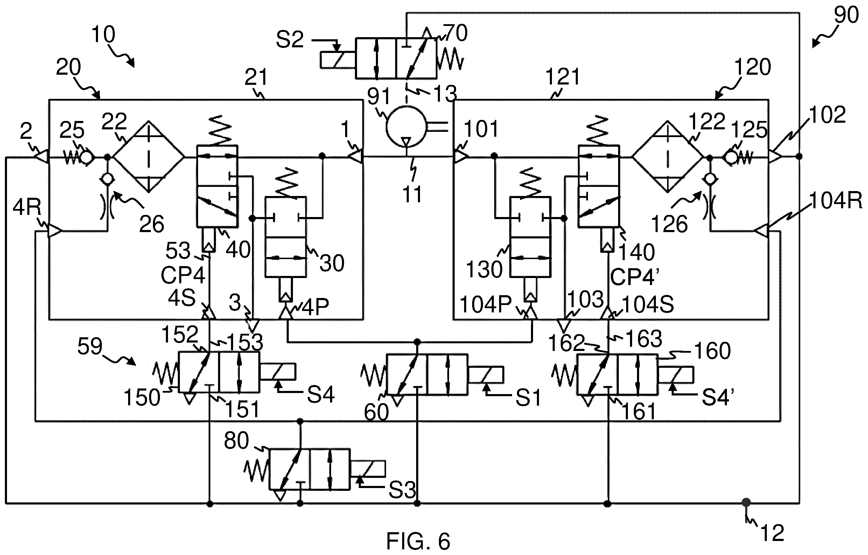

The air dryer system 10 of Fig. 1 comprises the solenoid valve assembly 59 that is separate from the air dryer 20 and in fluid communication with the control input ports 4P, 4S, 4R of the air dryer 20. Such a configuration affords greater flexibility in positioning the solenoid valve assembly 59. Such a configuration also lends itself to being used in association with twin chamber air dryers (as will be explained in more detail with reference to Fig. 5 and Fig. 6).

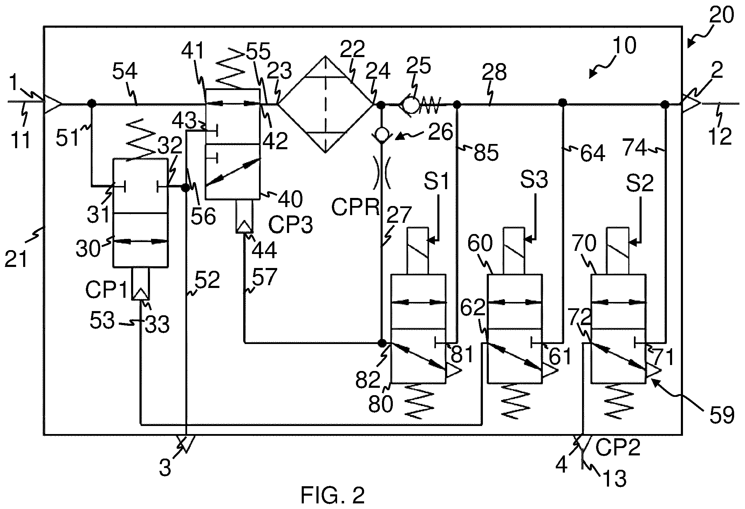

Fig. 2 shows an air dryer 20 which comprises the air dryer system 10. The solenoid valve assembly 59, the purge valve 30, and the switching valve 40 are comprised by the air dryer 20. The solenoid valve assembly 59, the purge valve 30, and the switching valve 40 may be arranged in the housing 21 of the air dryer 20. The desiccant cartridge 22 may be reversibly engageable with and disengageable from the housing 21 in a destruction-free manner.

The air dryer 20 comprises the solenoid valve assembly 59. Thus, it is not required for the housing 21 to have the control input ports 4P, 4R, 4S. The housing 21 has a compressor control output port 4 to provide the second control signal CP2 for off-loading the compressor.

The first solenoid valve input port 61, the second solenoid valve input port 71, and the third solenoid valve input port 81 are in fluid communication with the dryer outlet 2. For illustration, the first solenoid valve input port 61, the second solenoid valve input port 71, and the third solenoid valve input port 81 may be in fluid communication with a portion of the output line 28 in between the outlet check valve 25 and the dryer outlet 2.

The first solenoid valve outlet port 62 is connected to the purge valve control signal line 53, which is also connected to the purge valve control signal input 33. The second solenoid valve outlet port 72 is connected to the compressor control outlet port 4 to provide the second control signal CP2 to the compressor via the compressor off-loading line 13. The third solenoid valve output port 83 is connected to the switching valve control port 44 via the switching valve control signal line 57. The third solenoid valve output port 83 is also connected to the regeneration line 27.

The solenoid valve assembly 59, the purge valve 30, and the switching valve 40 are configured to operate as explained in association with Fig. 1. Thus, the air dryer 20 of Fig. 2 is configured to, inter alia, perform a regeneration of the desiccant cartridge 22 that does not affect the compressor discharge line 11 and/or to perform venting of the compressor discharge line 11 without affecting the pneumatic consumer system pressure.

The housing 22 comprises an electric interface to receive the first electric control signal S1, the second electric control signal S2, and the third electric control signal S3 from an electronic control unit.

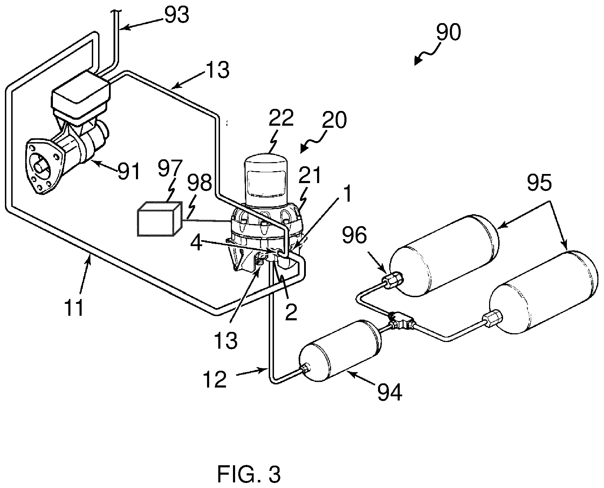

Fig. 3 shows a schematic representation of a pneumatic vehicle system 90 according to an embodiment. The pneumatic vehicle system 90 comprises an air dryer 20 that comprises the solenoid valve assembly 59, the purge valve 30, the switching valve 40, and the desiccant cartridge. The air dryer 20 may be configured and operative as explained with reference to Fig. 2. The pneumatic vehicle system 90 comprises the compressor 91. The compressor 91 is connected to a compressor intake line 93 having an intake opening for air intake. The compressor 91 is coupled to the air dryer 20 via the compressor discharge line 11 and the compressor off-loading control line 13. The compressor 91 is operative to enter an off-load state (e.g., idle or stopped) responsive to the second control pressure signal CP2 received via the compressor off-loading control line 13.

The pneumatic system 90 comprises an electronic control unit 90. The electronic control unit 90 is configured to generate the first electric control signal S1, the second electric control signal S2, and the third electric control signal S3 to control the solenoid valve assembly 59. The electronic control unit 90 is interfaced with the solenoid valve assembly 59 via one or several electric control signal link(s) 98.

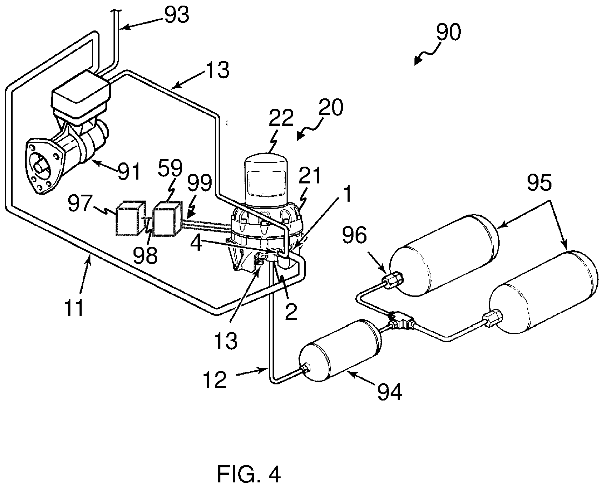

The pneumatic system 90 may comprise components of a pneumatic consumer system and/or components that interface the air dryer 20 with the pneumatic consumer system, such as a supply tank 94 connected to the dryer outlet 2 via the supply line 12. The pneumatic consumer system may comprise pneumatic consumer system reservoir(s) 95 and other pneumatic components such as check valves 96. Fig. 4 shows a schematic representation of a pneumatic vehicle system 90 according to an embodiment. The pneumatic vehicle system 90 comprises an air dryer 20 and the solenoid valve assembly 59 separate from the air dryer 20. The air dryer comprises the purge valve 30, the switching valve 40, and the desiccant cartridge 21. The air dryer 20 and the solenoid valve assembly 59 may be configured and operative as explained with reference to Fig. 1.

For an air dryer system 10 having one desiccant cartridge 22 (as shown in Fig. 1, Fig. 2, Fig. 3, and Fig. 4), the air dryer system 10 is operative to provide the various functions discussed herein by generating the control pressure signals using a solenoid valve assembly 59 that includes the first, second, and third solenoid valves 60, 70, 80. In this case, the air dryer system 10 may be configured in such a manner that the control pressure signals received for on-load operation, off-load operation, decreasing pneumatic consumer system pressure with running compressor 91, regeneration without affecting the compressor discharge line 11, and venting of the compressor discharge line 12 are provided by the first, second, and third solenoid valves 60, 70, 80. The air dryer system 10 may be configured in such a manner that the control pressure signals received for on-load operation, off-load operation, decreasing pneumatic consumer system pressure with running compressor 91, regeneration without affecting the compressor discharge line 11, and venting of the compressor discharge line 12 are provided by not more than three different solenoid valves 60, 70, 80.

The solenoid valve assembly 59 may include more than three solenoid valves, e.g., when used in a twin chamber air dryer.

Fig. 5 shows a pneumatic circuit diagram of a pneumatic vehicle system 90 which comprises the compressor 91 and an air dryer system 10 that provides a twin chamber air dryer configuration. The air dryer system 10 comprises an air dryer 20, a further air dryer 120, and a solenoid valve assembly comprising the first solenoid valve 60, the second solenoid valve 70, the third solenoid valve 80, and a fourth solenoid valve 150.

The air dryer 20 comprises the desiccant cartridge 22, the purge valve 30, the switching valve 40, the outlet line 28 comprising the outlet check valve 25, and the regeneration line 27 comprising the regeneration check valve 26. The air dryer 20 comprises the dryer inlet 1, the dryer outlet 2, and the dryer exhaust 3. The air dryer 20 comprises the first control input port 4S, the second control input port 4P, and the third control input port 4R. These components of the air dryer 20 were already discussed herein and may be configured and operative as previously discussed in association with, e.g., Fig. 1.

The air dryer 20 comprises a selection control output port 2C that may be used for selecting one of the air dryer 20 and the further air dryer 120 for on-load operation or for regeneration. The selection control output port 2C is coupled to the outlet line 28, at a location between the desiccant cartridge 22 and the outlet check valve 25.

The further air dryer 120 may have a construction identical to that of the air dryer 20. This facilitates manufacture and maintenance. The further air dryer 120 comprises a further desiccant cartridge 122, a further purge valve 130, and a further switching valve 140, a further outlet line 128 comprising a further outlet check valve 125, and a further regeneration line 127 comprising a further regeneration check valve 126. The further air dryer 120 comprises a further dryer inlet 101, a further dryer outlet 102, and a further dryer exhaust 103. The further air dryer 120 comprises a further first control input port 104S, a further second control input port 104P, and a further third control input port 104R. These components of the further air dryer 120 may be configured and operative as previously discussed in association with, e.g., Fig. 1.

The further air dryer 120 may comprise a further selection control output port 102C that may be rendered inoperative (e.g., closed) in the further air dryer 120.

The air dryer inlet 1 and the further air dryer inlet 101 are connected to the compressor discharge line 11. The air dryer outlet 2 and the further air dryer outlet 102 are connected to the supply line 12 to provide dried air to the pneumatic consumer system.

The first solenoid valve 60 has the first solenoid output port that is in fluid communication with both the first control input port 4P of the air dryer 4P and with the further first control input port 104P of the further air dryer 104P. The first solenoid valve 60 is configured to set the purge valve 30 and the further purge valve 130 to the second purge valve state. This causes the purge valve 30 to establish fluid communication between the dryer inlet 1 and the dryer exhaust 3 and causes the further purge valve 130 to establish fluid communication between the further dryer inlet 1 and the further dryer exhaust 103. This is useful for decreasing pneumatic consumer system pressure while the compressor 91 continues to pump and/or for venting the compressor discharge line 11.

The second solenoid valve 70 is operative to provide a second control pressure signal to the compressor 91 via the compressor off-loading control line 13, to selectively off-load the compressor 91. The second solenoid valve 70 has the second solenoid valve output port connected to the compressor off-loading control line 13.

The third solenoid valve 80 has the third solenoid control output port which is in fluid communication with both the second control input port 4R and the further second control input port 104R. Thus, the third solenoid valve 80 is configured to provide the regeneration control pressure signal to the second control input port 4R and the further second control input port 104R (it being noted that only one of the air dryer 20 and the further air dryer 120 being selected, by means of the fourth solenoid valve 150, for regeneration at any given time).

The fourth solenoid valve 150 comprises a fourth solenoid valve input port 151 in fluid communication with the supply line 12. The fourth solenoid valve 150 comprises a fourth solenoid valve input port 152 in fluid communication with the third control input port 4S of the air dryer 20 via a fourth control signal line 153 to provide a fourth control pressure signal CP4. Thus, the air dryer system 10 is configured in such a way that different solenoid valves 150, 80 are provided to control the switching valve 40 (via the fourth solenoid valve 150) and to provide the regeneration control pressure signal (via the third solenoid valve 80). The fourth solenoid control valve 50 is controllable by a fourth electric control signal S4, which may be generated by the electric control unit 97.

The fourth solenoid valve 150 is configured to control the switching valve 40 so as to implement a selection function of selecting one of the air dryer 20 and the further air dryer 120 for on-load operation (in which air is dried by the selected one of the air dryer 20 and the further air dryer 120) and for regeneration (in which regeneration is performed for one of the air dryer 20 and the further air dryer 120 for on-load operation, depending on the output of the fourth solenoid valve). Thus, the fourth solenoid valve 150 implements a switch between the desiccant cartridge 22 and the further desiccant cartridge 122 for on-load operation and regeneration, respectively. To implement this change, the selection control output port 2C is in fluid communication, via the selection interconnection line 105, with the further third control input port 104S of the further air dryer 120.

The solenoid valve assembly 59 may be configured such that each of the first, second, third, and fourth solenoid valves 60, 70, 80, 150 outputs a first pneumatic signal value (e.g., no positive pressure at the solenoid valve output ports) for an on-load state in which the compressor pumps and the air dryer 20 provides dried air at the dryer outlet 2. Thereby, the solenoid valve assembly 59 is operative to provide the control pressure signals that set the air dryer assembly 10 to the on-load state in which the cartridge 22 of the air dryer 20 provides dried air.

The solenoid valve assembly 59 may be configured such that each of the first, second, and third solenoid valves 60, 70, 80 outputs a first pneumatic signal value (e.g., no positive pressure at the solenoid valve output ports) and the fourth solenoid valve 150 output a second pneumatic signal value (e.g., the pressure at the supply line 12) for an on-load state in which the compressor pumps and the further air dryer 120 provides dried air at the further dryer outlet 102. Thereby, the solenoid valve assembly 59 is operative to provide the control pressure signals that set the air dryer assembly 10 to the on-load state in which the further cartridge 122 of the further air dryer 20 provides dried air. The selection or switch between cartridges is attained by the control pressure signal provided by the fourth solenoid valve 150 to the third control input port 4S of the air dryer 20 and then provided, via the selection control output port 2C and the selection interconnection line 105 to the further third control input port 104S of the further air dryer 120.

The solenoid valve assembly 59 may be configured such that each of the first, third, and fourth solenoid valves 60, 80, 150 outputs the first pneumatic signal value (e.g., no positive pressure at the solenoid valve output ports) and the second solenoid valve 70 outputs the second pneumatic signal value (e.g., the pressure at the supply line 12) to off-load the compressor (e.g., for setting the compressor to idle mode or stopping the compressor). Thereby, the solenoid valve assembly 59 may be operative to provide the control pressure signals that set the air dryer assembly 10 to the off-load state.

The solenoid valve assembly 59 may be configured such that both the first solenoid valve 60 and the third solenoid valve 80 outputs the second pneumatic signal value (e.g., the pressure at the supply line 12) and both the second solenoid valve 70 and the fourth solenoid valve 150 outputs the first pneumatic signal value (e.g., no positive pressure at solenoid valve output port 72) for decreasing pressure in the pneumatic consumer system connected to the supply line while the compressor 91 continues to pump.

The solenoid valve assembly 59 may be configured such that each of the second solenoid valve 70, the third solenoid valve 80, and the fourth solenoid valve outputs the second pneumatic signal value (e.g., the pressure at the supply line 12) and the first solenoid valve 60 outputs the first pneumatic signal value (e.g., no positive pressure at solenoid valve output port 72) for performing regeneration of the cartridge 22 of the air dryer 20.

The solenoid valve assembly 59 may be configured such that both the second solenoid valve 70 and the third solenoid valve 80 outputs the second pneumatic signal value (e.g., the pressure at the supply line 12) and both the first solenoid valve 60 and the fourth solenoid valve 150 outputs the first pneumatic signal value (e.g., no positive pressure at solenoid valve output port 72) for performing regeneration of the further cartridge 122 of the further air dryer 120.

The solenoid valve assembly 59 may be configured such that both the first solenoid valve 60 and the second solenoid valve 70 output the second pneumatic signal value (e.g., the pressure at the dryer outlet 2) and the third solenoid valve outputs 80 the first pneumatic signal value (e.g., no positive pressure at the third solenoid valve output port) for performing venting of the compressor discharge line 11. In this case, the output of the fourth solenoid valve 150 may be either the first or the second pneumatic signal value. Thereby, the compressor discharge line is vented without affecting pneumatic consumer system pressure (e.g., without affecting the pressure in the supply line 12).

Thus, the solenoid valve assembly 59 in association with the pneumatically controllable valve assembly comprising the purge valve 30, the switching valve 40, the further purge valve 130, and the further switching valve 140 is configured to provide more versatile air dryer system functions. In particular, the air dryer system 10 is configured to allow a regeneration to be performed for the cartridge 22 and the further cartridge 122, respectively without affecting the compressor discharge line 11. The air dryer system 10 is configured to perform venting of the compressor discharge line 11 without affecting the pressure in the pneumatic consumer system (e.g., without affecting the pressure in the supply line 12).

For an air dryer system 10 having a twin chamber configuration and comprising the desiccant cartridge 22 and the further desiccant cartridge 122, the air dryer system 10 is operative to provide the various functions discussed herein by generating the control pressure signals using a solenoid valve assembly 59 that includes the first, second, third, and fourth solenoid valves 60, 70, 80, 150. In this case, the air dryer system 10 may be configured in such a manner that the control pressure signals received for on-load operation using the desiccant cartridge 22 for drying, on-load operation using the further desiccant cartridge 122 for drying, off-load operation, decreasing pneumatic consumer system pressure with running compressor 91, regeneration of the desiccant cartridge 22 without affecting the compressor discharge line 11, regeneration of the further desiccant cartridge 22 without affecting the compressor discharge line 11, and venting of the compressor discharge line 12 are provided by the first, second, third, and fourth solenoid valves 60, 70, 80, 150.

The electronic control unit 97 is operative to provide a fourth electric control signal S4 to control the fourth solenoid valve 150.

Fig. 6 shows an air dryer system 10 having a twin chamber configuration. The air dryer system 10 comprises the air dryer 20 and the further air dryer 120. Both the air dryer 20 and the further air dryer 120 may have a construction and operation identical to the air dryer 20 of Fig. 1. As compared to Fig. 5, the air dryer 20 and the further air dryer 120 does not have switching control output port 2C.

Selection of one of the air dryer 20 and the further air dryer 120 for on-load operation is performed by a fourth solenoid control valve 150 and a further fourth solenoid control valve 160. The further fourth solenoid control valve 160 has a further fourth solenoid valve input port 161 and a further fourth solenoid valve output port 162 connected to the further third control input port 104S via a further fourth control signal line 163 to provide a further fourth control pressure signal CP4'. The further fourth solenoid control valve 160 is controllable by a further fourth electric control signal S4', which may be generated by the electric control unit 97.

The solenoid valve assembly 59 may be operative such that one of the fourth solenoid valve 150 and the further fourth solenoid valve 160 outputs the first pneumatic signal value (e.g., no positive pressure at the output port) and the other one of the fourth solenoid valve 150 and the further fourth solenoid valve 160 outputs the second pneumatic signal value (e.g., the pressure at the supply line 12) when performing either one of on-load operation and regeneration. Thereby, it is selected whether the desiccant cartridge 22 or the further desiccant cartridge 122 dries the air or is regenerated. Other aspects of the operation of the solenoid valve assembly 59 correspond to those described in association with Fig. 5.

For an air dryer system 10 having a twin chamber configuration and comprising the desiccant cartridge 22 and the further desiccant cartridge 122, the air dryer system 10 of Fig. 6 is operative to provide the various functions discussed herein by generating the control pressure signals using a solenoid valve assembly 59 that includes the first, second, third, and fourth solenoid valves 60, 70, 80, 150 and the further fourth solenoid valve 160. In this case, the air dryer system 10 may be configured in such a manner that the control pressure signals received for on-load operation using the desiccant cartridge 22 for drying, on-load operation using the further desiccant cartridge 122 for drying, off-load operation, decreasing pneumatic consumer system pressure with running compressor 91, regeneration of the desiccant cartridge 22 without affecting the compressor discharge line 11, regeneration of the further desiccant cartridge 22 without affecting the compressor discharge line 11, and venting of the compressor discharge line 12 are provided by the first, second, third, and fourth solenoid valves 60, 70, 80, 150 and the further fourth solenoid valve 160.

While five solenoid valves are required for the air dryer system 10 of Fig. 6, the air dryer system 10 provides enhanced switching consistency and signal independence.

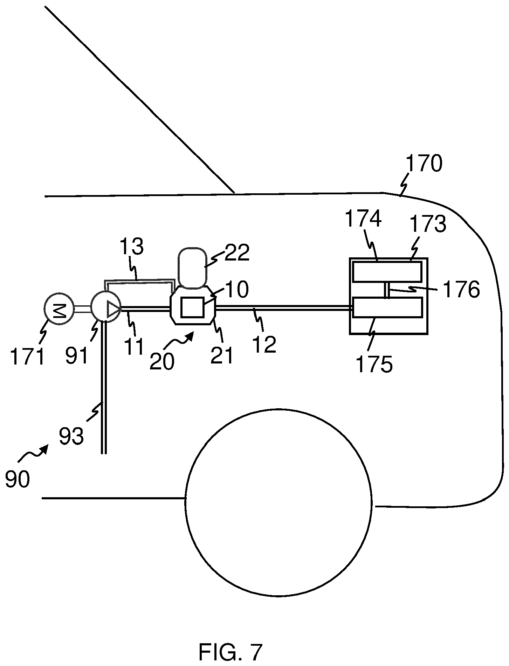

Fig. 7 is a schematic view of a vehicle 170 comprising a pneumatic vehicle system 90. The pneumatic vehicle system 170 comprises an air dryer system 10 according to an aspect or embodiment, which may be provided in the air dryer 20. The pneumatic vehicle system 170 comprises a compressor 91, a drive 171 configured to drive the compressor 91, an intake line 93 having an intake opening for ambient air intake. The pneumatic vehicle system 170 comprises the compressor discharge line 11 connected to a discharge port of the compressor 91 and to the dryer inlet 1 of the air dryer 20. The pneumatic vehicle system 170 comprises the compressor off-loading control line 13 which is connected to an off-loading control port of the compressor 91 and configured to provide the second control pressure signal CP2 to the compressor 91.

The pneumatic vehicle system 170 comprises a pneumatic consumer system 173. The pneumatic consumer system 173 comprises at least one pneumatic consumer 174. The pneumatic consumer system 173 is in fluid communication with, and may be directly connected to, the supply line 12. The pneumatic consumer system 173 may comprise at least one pneumatic consumer system valve 175 interconnected between the supply line 12 and the at least one pneumatic consumer 174. The pneumatic consumer system 173 may also comprise pneumatic consumer system connection(s) 176 configured to provide the dried air to the at least one pneumatic consumer 174.

As previously explained, the pneumatic vehicle system 170 may comprise a tank viand/or at least one controllable valve (as illustrated in Fig. 3 and Fig. 4), coupled to the supply line 12.

The vehicle 170 may in particular be a commercial vehicle.

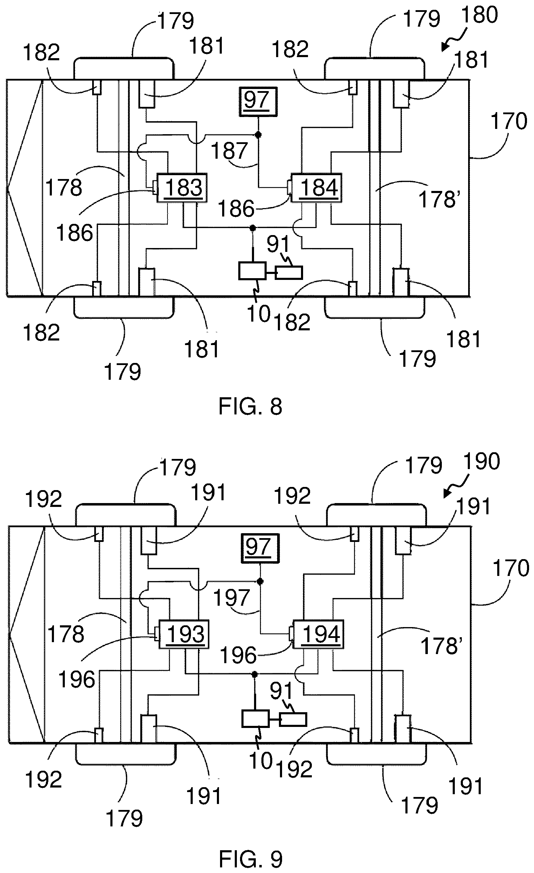

Fig. 8 shows a schematic representation of a vehicle 170 comprising a pneumatic vehicle system that comprises a pneumatic braking system 180, such as an electropneumatic braking system. The vehicle 170 may be a commercial vehicle. The vehicle 170 has a plurality of wheels 179 and a plurality of axles 178, 178'.

The pneumatic braking system 180 comprises pneumatic consumers which comprise a plurality of brake cylinders 181. The plurality of brake cylinders 181 are in fluid communication with output ports of at least one modulator 183, 184. In the illustrated implementation, the pneumatic braking system 180 comprises a front axle modulator 183 having an electric control interface186 connected to the electronic control unit 97 via at least one electric modulator control line 187. The pneumatic braking system 180 comprises a rear axle modulator 184 having an electric control interface186 connected to the electronic control unit 97 via the at least one electric modulator control line 187. The modulator(s) 183, 184 may also be interfaced with sensors 182, such as wheel speed sensors.

An air supply system comprising the compressor 91 and the air dryer system 10 provides dried pressure air, which may be provided to the brake cylinders 181 under the control of the modulators 183, 184.

Fig. 9 shows a schematic representation of a vehicle 170 comprising a pneumatic vehicle system that comprises a pneumatic levelling system 190, such as an electropneumatic levelling system. The vehicle 170 may be a commercial vehicle. The vehicle 170 has a plurality of wheels 179 and a plurality of axles 178, 178'.

The pneumatic levelling system 190 comprises pneumatic consumers which comprise a plurality of levelling valves 191. The plurality of levelling valves 191 are in fluid communication with output ports of at least one modulator 193, 194. In the illustrated implementation, the pneumatic levelling system 190 comprises a front axle modulator 193 having an electric control interface186 connected to the electronic control unit 97 via at least one electric modulator control line 197. The pneumatic levelling system 190 comprises a rear axle modulator 194 having an electric control interface186 connected to the electronic control unit 97 via the at least one electric modulator control line 197. The modulator(s) 193, 194 may also be interfaced with sensors 192, such as distance sensors.

An air supply system comprising the compressor 91 and the air dryer system 10 provides dried pressure air, which may be provided to the levelling valves 191 under the control of the modulators 193, 194.

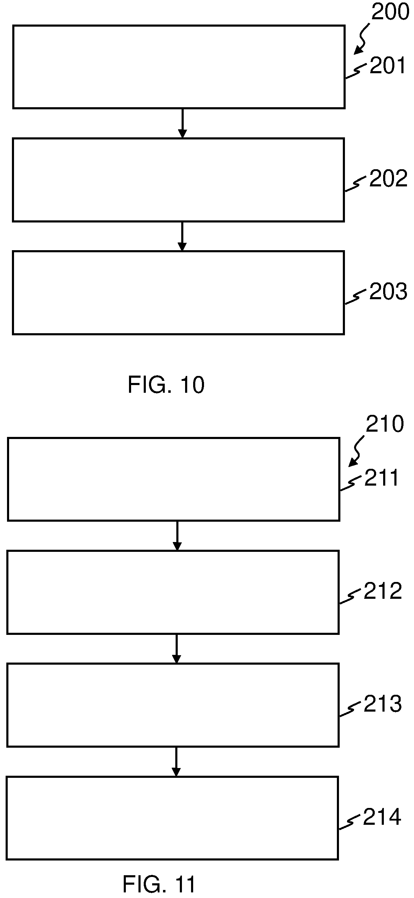

Fig. 10 is a flow chart of a method 200 of controlling a pneumatic vehicle system. The method 200 may be performed automatically by or using the air dryer system 10. The method 200 comprises generating 201, by the first solenoid valve 60, the first control pressure signal CP1 to control the purge valve 30 of the air dryer system 10. The purge valve 30 may be controlled to selectively establish fluid communication between the dryer inlet 1 and the dryer exhaust 3 via the purge valve 30. Generating the first control pressure signal CP1 may comprise controlling, by the ECU 79, the first solenoid valve 60.

The method 200 comprises generating 202, by the second solenoid valve 70, the second control pressure signal CP2 for provision to the compressor 91 via the compressor off-loading control line 13. The compressor 91 may be controlled to selectively off-load the compressor (e.g., idle ode or stopped). Generating the second control pressure signal CP2 may comprise controlling, by the ECU 79, the second solenoid valve 70.

The method 200 comprises generating 203, by the third solenoid valve 70, the third control pressure signal CP3 to control the switching valve 40 and the regeneration control pressure signal CPR for provision to the regeneration line 27. The switching valve 40 may be controlled to selectively block fluid communication between the dryer inlet 1 and the desiccant cartridge 22 and to selectively establish fluid communication between the desiccant cartridge and the dryer exhaust 3. Generating the third control pressure signal CP3 and the regeneration control pressure signal CPR may comprise controlling, by the ECU 79, the third solenoid valve 80.

In the method 200, the various control pressure signals are generated such that the functions of on-load operation, off-load operation, decreasing the pressure in the supply line via the air dryer system without requiring the compressor to be in an off-load state, regeneration of the desiccant cartridge without affecting the compressor discharge line, and venting of the compressor discharge line without affecting the pneumatic consumer system pressure are selectively attained.

Fig. 11 is a flow chart of a method 210 of controlling a pneumatic vehicle system. The method 210 may be performed automatically by or using the air dryer system 10 having a twin chamber configuration (such as the air dryer system 10 of Fig. 5 or the air dryer system 10 of Fig. 6). The method 210 comprises generating 211, by the first solenoid valve 60, the first control pressure signal CP1 to control the purge valve 30 and the further purge valve 130 of the air dryer system 10. The purge valve 30 may be controlled to selectively establish fluid communication between the dryer inlet 1 and the dryer exhaust 3 via the purge valve 30. The further purge valve 130 may be controlled to selectively establish fluid communication between the further dryer inlet 101 and the further dryer exhaust 103 via the further purge valve 130. Generating the first control pressure signal CP1 may comprise controlling, by the ECU 79, the first solenoid valve 60.

The method 210 comprises generating 212, by the second solenoid valve 70, the second control pressure signal CP2 for provision to the compressor 91 via the compressor off-loading control line 13. The compressor 91 may be controlled to selectively off-load the compressor (e.g., idle ode or stopped). Generating the second control pressure signal CP2 may comprise controlling, by the ECU 79, the second solenoid valve 70.

The method 210 comprises generating 213, by the third solenoid valve 70, the regeneration control pressure signal CPR for provision to the regeneration line 27 and the further regeneration line 127. Generating the third control pressure signal CP3 and the regeneration control pressure signal CPR may comprise controlling, by the ECU 79, the third solenoid valve 80.

The method 210 comprises generating 214, by a fourth solenoid valve 150 (Fig. 5) or by a fourth solenoid valve 150 and a further fourth solenoid valve 160 (Fig. 6), at least one third control pressure signal to control the switching valve 40 and the further switching valve 140. The switching valve 40 may be controlled to selectively block fluid communication between the dryer inlet 1 and the desiccant cartridge 22 and to selectively establish fluid communication between the desiccant cartridge and the dryer exhaust 3. The further switching valve 140 may be controlled to selectively block fluid communication between the further dryer inlet 101 and the further desiccant cartridge 122 and to selectively establish fluid communication between the further desiccant cartridge 122 and the further dryer exhaust 103. Generating the at least one third control pressure signal may comprise controlling, by the ECU 79, the switching valve 40 and the further switching valve 140.

In the method 220, the various control pressure signals are generated such that the functions of on-load operation using the desiccant cartridge 22 for drying, on-load operation using the further desiccant cartridge 122 for drying, off-load operation, decreasing the pressure in the supply line via the air dryer system without requiring the compressor to be in an off-load state, regeneration of the desiccant cartridge 22 without affecting the compressor discharge line, regeneration of the further desiccant cartridge 122 without affecting the compressor discharge line, and venting of the compressor discharge line without affecting the pneumatic consumer system pressure are selectively attained.

The techniques disclosed herein are particularly useful in association with a commercial vehicle, without being limited thereto.

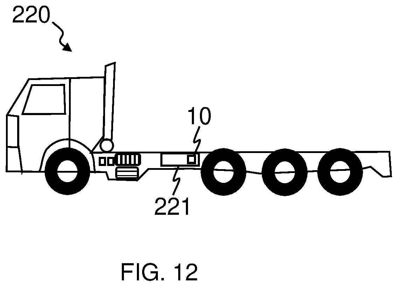

Fig. 12 is a schematic representation of a commercial vehicle 220. The commercial vehicle 220 comprises at least one pneumatic vehicle system 221. The at least one pneumatic vehicle system 220 comprises an air dryer system 10 according to an embodiment.

Various effects and advantages are attained by embodiments of the invention. For illustration, embodiments provide an air dryer system that is operable in a more versatile manner and a control method for use with such an air dryer system. The air dryer system and control method allow a regeneration to be performed without having to set the compressor to an off-load state (e.g., idle or stopped) and/or allow venting of a compressor discharge line without the venting affecting a pneumatic consumer system. The air dryer system and control method provide such functionality with a low number of additional solenoid valve(s). The air dryer system and control method are readily applicable to a twin chamber air dryer configuration.

Various modifications may be made in additional embodiments. For illustration, while the pneumatic vehicle system may comprise a pneumatic braking system and/or a pneumatic levelling system, the pneumatic vehicle system may comprise alternative or additional pneumatic consumer systems, such as a sensor cleaning system (which may be part of a driver assistance system). For further illustration, while an air dryer system having a twin chamber configuration may comprise two air dryers having identical construction, the air dryer system may also comprise two air dryers having different constructions.

The disclosure also covers all further features shown in the drawings individually although they may not have been described in the afore or following description. Also, single alternatives of the embodiments described in the figures and the description and single alternatives of features thereof can be disclaimed from the subject matter of the invention or from disclosed subject matter. The disclosure comprises subject matter consisting of the features defined in the claims or the exemplary embodiments as well as subject matter comprising said features.

Furthermore, the word "comprising" does not exclude other elements or steps, and the indefinite article "a" or "an" does not exclude a plurality. A single unit or step may fulfil the functions of several features recited in the claims. The mere fact that certain measures are recited in mutually different dependent claims does not indicate that a combination of these measures cannot be used to advantage. The terms "essentially," "about," "approximately," "substantially" and the like in connection with an attribute or a value particularly also define exactly the attribute or exactly the value, respectively. Any reference signs in the claims should not be construed as limiting the scope.

### List of Reference Numerals (part of the description)

- 1: dryer inlet
- 2: dryer outlet
- 2C: selection control output port
- 3: dryer exhaust
- 4: compressor control output port
- 4P: first control input port
- 4R: second control input port
- 4S: third control input port
- 10: air dryer system
- 11: compressor discharge line
- 12: supply line
- 13: compressor off-loading control line
- 20: air dryer
- 21: housing
- 22: desiccant cartridge
- 23: desiccant cartridge port
- 24: further desiccant cartridge port
- 25: outlet check valve
- 26: regeneration check valve
- 27: regeneration line
- 28: outlet line
- 29: selection control line
- 30: purge valve
- 31: first purge valve port
- 32: second purge valve port
- 33: purge valve control input
- 40: switching valve
- 41: first switching valve port
- 42: second switching valve port
- 43: third switching valve port
- 44: switching valve control input
- 51: first purge valve connection line
- 52: second purge valve connection line
- 53: purge valve control signal line
- 54: first switching valve connection line
- 55: second switching valve connection line
- 56: third switching valve connection line
- 57: switching valve control signal line
- 59: solenoid valve assembly
- 60: first solenoid valve
- 61: first solenoid valve input port
- 62: first solenoid valve output port
- 63: first control signal line
- 64: first solenoid valve input line
- 70: second solenoid valve
- 71: second solenoid valve input port
- 72: second solenoid valve output port
- 73: second control signal line
- 74: second solenoid valve input line
- 80: third solenoid valve
- 81: third solenoid valve input port
- 82: third solenoid valve output port
- 83: regeneration control signal line
- 84: third control signal line
- 85: third solenoid valve input line
- 90: pneumatic vehicle system
- 91: compressor
- 92: compressor discharge port
- 93: compressor intake line
- 94: supply tank
- 95: pneumatic consumer system reservoir(s)
- 96: check valve(s)
- 97: electronic control unit
- 98: electric control signal link(s)
- 99: control pressure signal lines
- 101: further dryer inlet
- 102: further dryer outlet
- 102C: further selection control output port
- 103: further dryer exhaust
- 104P: further first control input port
- 104R: further second control input port
- 104S: further third control input port
- 105: selection interconnection line
- 120: further air dryer
- 121: further housing
- 122: further desiccant cartridge
- 125: further outlet check valve
- 126: further regeneration check valve
- 130: further purge valve
- 140: further switching valve
- 150: fourth solenoid valve
- 151: fourth solenoid valve input port
- 152: fourth solenoid valve output port
- 153: fourth control signal line
- 160: further fourth solenoid valve
- 161: further fourth solenoid valve input port
- 162: further fourth solenoid valve output port
- 163: further fourth control signal line
- 170: vehicle
- 171: compressor drive
- 173: pneumatic consumer system
- 174: pneumatic consumer(s)
- 175: pneumatic consumer system valve(s)
- 176: pneumatic consumer system connection(s)
- 178, 178': axle
- 179: wheel
- 180: braking system
- 181: brake cylinder
- 182: sensor
- 183, 184: modulator
- 186: electric control interface
- 187: electric modulator control line
- 190: air spring system
- 191: air spring
- 192: sensor
- 193, 194: modulator
- 196: modulator output
- 197: electric modulator control line
- 200: method
- 201: method step
- 202: method step
- 203: method step
- 210: method
- 211: method step
- 212: method step
- 213: method step
- 214: method step
- 220: commercial vehicle
- 221: pneumatic vehicle system
- CP1: first control pressure signal
- CP2: second control pressure signal
- CP3: third control pressure signal
- CPR: regeneration control pressure signal
- S1: first electric control signal
- S2: second electric control signal
- S3: third electric control signal
- S4: fourth electric control signal
- S4': further fourth electric control signal

## Claims

1. Air dryer system (10), comprising:
a dryer inlet (1) configured to receive air from a compressor discharge line (11),
a dryer outlet (2) configured to supply dried air,
a desiccant cartridge (22) configured to receive the air from the dryer inlet (1) and to provide the dried air for outputting via the dryer outlet (2),
a dryer exhaust (3),
a pneumatically controlled valve assembly (30, 40), comprising
a purge valve (30) comprising a first purge valve port (31) connected to the dryer inlet (1) and a second purge valve port (32) connected to the dryer exhaust (3), the purge valve (30) being pneumatically controllable, and
a switching valve (40) comprising a first switching valve port (41) connected to the dryer inlet (1), a second switching valve port (42) connected to the desiccant cartridge (22), and a third switching valve port (43) connected to the dryer exhaust (3), the switching valve (40) being pneumatically controllable, and
a solenoid valve assembly (59) comprising
a first solenoid valve (60) configured to provide a first control pressure signal (CP1) to control the purge valve (30), and
a second solenoid valve (70) configured to provide a second control pressure signal (CP2) to control the compressor (91).

2. Air dryer system (10) of claim 1, wherein the solenoid valve assembly (59) further comprises a third solenoid valve (80) configured to provide a regeneration control pressure signal (CPR) to effect desiccant regeneration of the desiccant cartridge (22).

3. Air dryer system (10) of claim 2, wherein the third solenoid valve (80) is configured to provide both the regeneration control pressure signal (CPR) and a third control pressure signal (CP3) to control the switching valve (40).

4. Air dryer system (10) of claim 2 or claim 3, wherein the solenoid valve assembly (59) is configured to provide the first control pressure signal (CP1), the second control pressure signal (CP2), and the regeneration control pressure signal (CPR) independently of each other.

5. Air dryer system (10) of any one of the preceding claims, wherein the purge valve (30) has a first purge valve position and a second purge valve position, wherein the purge valve (30) is configured such that it reduces or blocks air passage between the dryer inlet (1) and the dryer exhaust (3) through the purge valve (30) when the purge valve (30) is in the first purge valve position, and wherein the purge valve (30) is configured to provide fluid communication between the dryer inlet (1) and the dryer exhaust (3) when the purge valve (30) is in the second purge valve position.

6. Air dryer system (10) of any one of the preceding claims, wherein the switching valve (40) has a first switching valve position and a second switching valve position, wherein the switching valve (40) is configured to provide fluid communication between the dryer inlet (1) and the desiccant cartridge (22) when the switching valve (40) is in the first switching valve position, and wherein the switching valve (40) is configured to provide fluid communication between the desiccant cartridge (22) and the exhaust port when the switching valve (40) is in the second switching valve position.

7. Air dryer system (10) of any one of the preceding claims, comprising
a further desiccant cartridge (122), and
a further pneumatically controlled valve assembly (130, 140) comprising a further purge valve (130) and a further switching valve (140), the further purge valve (130) being pneumatically controllable, and the further switching valve (140) being pneumatically controllable,
wherein the first solenoid valve (60) is configured to provide the first control pressure signal (CP1) to control both the purge valve (30) and the further purge valve (130).

8. Air dryer system (10) of claim 7, comprising a further inlet port (101) configured to be coupled to the compressor discharge line (11) and a further exhaust port (103), wherein the further purge valve (30) is configured to selectively establish fluid communication between the further inlet port (101) and the further exhaust port (103), and wherein the further switching valve (40) is configured to establish fluid communication between the further desiccant cartridge (22) and one of the further inlet port (101) and the further exhaust port (103).

9. Air dryer system (10) of claim 7 or claim 8, wherein the solenoid valve assembly (59) further comprises at least one fourth solenoid valve (150; 150, 160) configured to generate at least one fourth control pressure signal (CP4; CP4, CP4') to control at least one of the switching valve (40) and the further switching valve (140).

10. Air dryer system (10) of claim 9, wherein the solenoid valve assembly (59) is configured such that the at least one fourth control pressure signal (CP4; CP4, CP4') selects one of the desiccant cartridge (22) and the further desiccant cartridge (122) to perform desiccant regeneration or air drying.

11. Air dryer (20), comprising
an air dryer housing (21) and
the air dryer system (10) of any one of the preceding claims,
wherein the pneumatically controlled valve assembly (30, 40) and the solenoid valve assembly (59) are arranged in the air dryer housing (21).

12. Air dryer assembly (20, 59), comprising
an air dryer housing (21),
the air dryer system (10) of any one of the preceding claims,
wherein the pneumatically controlled valve assembly (30, 40) is arranged in the air dryer housing (21), and
wherein the solenoid valve assembly (59) is arranged outside the air dryer housing (21) and is connected to the pneumatically controlled valve assembly (30, 40) by pneumatic connections (99).

13. Pneumatic vehicle system (90; 180; 190; 221), comprising:
a compressor (91),
the air dryer (20) of claim 11 or the air dryer assembly (20, 59) of claim 12,
a pneumatic consumer system (95; 173; 181, 183, 184; 191, 193, 194),
a compressor discharge line (11) connected to a discharge port of the compressor (91) and the dryer inlet (1),
a supply line (12) connected to the dryer outlet (2) and the pneumatic consumer system (95; 173; 181, 183, 184; 191, 193, 194), and
an electronic control unit (97) configured to control the solenoid valve assembly (59).

14. Commercial vehicle (220), comprising the pneumatic vehicle system (90; 180; 190; 221) of claim 13.

15. Method of controlling a pneumatic vehicle system (90; 180; 190; 221),
the pneumatic vehicle system (90; 180; 190; 221) comprising a compressor (91) and an air dryer (20), the compressor (91) comprising a compressor discharge port, the air dryer (20) being connected to the compressor discharge port by a compressor discharge line (11),
wherein the air dryer (20) comprises a dryer inlet (1) configured to receive air from the compressor discharge line (11), a dryer outlet (2) configured to supply dried air, a desiccant cartridge (22) configured to receive the air from the dryer inlet (1) and to provide the dried air for outputting via the dryer outlet (2), and a dryer exhaust (3),
wherein the air dryer (20) comprises a pneumatically controlled valve assembly (30, 40), the pneumatically controlled valve assembly (30, 40) comprising
a purge valve (30) comprising a first purge valve port (31) connected to the dryer inlet (1) and a second purge valve port (32) connected to the dryer exhaust (3), the purge valve (30) being pneumatically controllable, and
a switching valve (40) comprising a first switching valve port (41) connected to the dryer inlet (1), a second switching valve port (42) connected to the desiccant cartridge (22), and a third switching valve port (43) connected to the dryer exhaust (3), the switching valve (40) being pneumatically controllable,
wherein the method comprises:
providing, by a first solenoid valve (60), a first control pressure signal (CP1) to control the purge valve (30), and
providing, by a second solenoid valve (70), a second control pressure signal (CP2) to control the compressor (91).
